# EUROPEAN PATENT SPECIFICATION

(11) **EP 4 586 465 B1**
(45) Date of publication and mention of the grant of the patent: **13.05.2026**
(21) Application number: 24151193.0
(22) Date of filing: 10.01.2024
(51) Int. Cl.: H02K 1/276, H02K 1/28, H02K 1/24

(54) **ROTOR AND ASSOCIATED ELECTRIC MACHINE, MOTOR COMPRESSOR AND MAGNETIC COUPLING**
ROTOR UND ZUGEHÖRIGE ELEKTRISCHE MASCHINE, MOTORVERDICHTER UND MAGNETKUPPLUNG
ROTOR ET MACHINE ÉLECTRIQUE ASSOCIÉE, COMPRESSEUR DE MOTEUR ET ACCOUPLEMENT MAGNÉTIQUE

(43) Date of publication of application: 16.07.2025
(73) Proprietor: GE Energy Power Conversion Technology Limited, Rugby, Warwickshire CV21 1BD (GB)
(72) Inventor: DURANTAY, Lionel, 54250 CHAMPIGNEULLES (FR); ANBARASU, Ramasamy, 54250 CHAMPIGNEULLES (FR); HUMBERT, Pierre, 54250 CHAMPIGNEULLES (FR); Leboeuf, Nicolas, 54250 CHAMPIGNEULLES (FR); CURE, Alexander, 54250 CHAMPIGNEULLES (FR)
(74) Representative: Casalonga

(56) References cited:
- CN-B- 110 556 944
- DE-A1- 102021 122 998
- US-A- 4 417 168
- US-A1- 2023 387 738

## Description

The present invention concerns permanent magnets rotors, a magnetic coupling and an electric machine comprising such rotors, and a motor compressor comprising such an electric machine.

It is known that the power density of an electric machine depends on the magnetic flux generated by the rotor and the stator of the electric machine.

For a permanent magnet rotor, the magnetic flux generated by the rotor is proportional to the volume of magnets of the rotor.

It is also known that the power density of an electric machine increases linearly by increasing linearly the rotation speed of the rotor.

It is known to arrange permanent magnets in a rotor comprising a central hole so that each permanent magnet extends between the central hole and the periphery of the rotor.

The permanent magnets are arranged regularly in the rotor to concentrate the magnetic flux (flux concentration rotor type).

Document CN 110 556 944 B discloses a permanent magnet rotor comprising a shaft.

The document US 2009/0224624 discloses a permanent magnet rotor comprising a shaft enclosing a magnetic mass comprising multilayers of permanent magnets (multi layers rotor type).

The magnetic mass comprises stacked rotor laminations including a first group of slots and a second group of slots arranged to form a pole, and a center hole lodging the rotor shaft.

The first group of slots is arranged to form a magnetic flux along a direct axis of the pole resulting from the first and second group of slots.

The second group of slots is arranged to provide a separation for the magnetic flux from adjacent poles and lying along a quadrature axis of said pole

Some of the first and second group of slots are arranged to receive permanent magnets, maximising the quadrature inductance versus the direct inductance leading to create reluctance torque on top of interaction torque produced by magnets and currents injected in a stator encompassing the rotor to maximize the torque generated by the rotor .

In the rotors known form the prior art, as the shaft goes through the magnetic mass to lodge the shaft, the volume of magnets arranged in the magnetic mass is limited.

Further, the rotation speed of the rotor is limited to reduce the centrifuge forces acting on the rotor laminations in order to limit the constraints on the periphery of the center hole of the rotor laminations.

The constraints on the center holes may shear the rotor laminations.

The rotation speed of the rotor may be chosen so that the peripheral speed of the rotor does not exceed 200 m.s⁻¹.

It is therefore proposed to overcome wholly or partially these disadvantages.

In view of the foregoing the invention proposes a rotor comprising:
- a cylindrical stack of laminations including:
   o at least a first group of slots and a second group of slots arranged to form a first pole, the first group of slots being arranged to form a magnetic flux along a direct axis of the pole resulting from the first and second group of slots, at least some of the first group of slots comprising first permanent magnets, the second group of slots being arranged from either side of the slots of the first group to provide a separation for the magnetic flux from adjacent poles and lying along a quadrature axis of said pole, at least some slots of the second group of slots comprising first permanent magnets, and
   o at least a second pole, the first pole and the second pole forming a pair of poles of the rotor.

The rotor further comprises:
- magnetic flux barriers arranged at each end of each slot of the first and second groups of slots,
- two half shafts enclosing the stack of laminations and forming a shaft of the rotor, the rotor being a non-through shaft rotor,
- two non-magnetic and electrically insulating end disks, each non-magnetic and electrically insulating end disk being interposed between one end of the stack and a half shaft, and
- a first set of tie rods connecting the two half shafts to keep the laminations of the stack compacted between the two half-shafts, each tie rod of the first set of tie rods being arranged between two adjacent slots of the first or second groups of slots.

Advantageously, at least some slots of the second group of slots closest to the periphery of the stack of laminations comprise non-magnetic and electrically insulating blocks.

Preferably, each half shaft comprises a flange in contact with a non-magnetic and electrically insulating end disk, the rotor further comprising a non-magnetic retaining ring enclosing the stack of laminations and partially the flanges of the half shafts, the diameter of the laminations being smaller than the diameter of the flanges so that the inner surface of the retaining ring is in contact with the peripheral surface of the flanges, the retaining ring being made of a non-magnetic and electrically insulating material.

Advantageously, the retaining ring is made of a stainless-steel.

Preferably, the retaining ring is made of composite fibers.

Advantageously, the laminations of the stack are separated by at least one intermediate non-magnetic and electrically insulating disk in two sub-stacks of laminations, the diameter of the intermediate non-magnetic and electrically insulating disk being equal to the diameter of the flanges so that the retaining ring is in contact the peripheral surface of the intermediate non-magnetic and electrically insulating disk.

Advantageously, the intermediate non-magnetic and electrically insulating disks are made of stainless-steel.

Preferably, the intermediate non-magnetic and electrically insulating disks are made of composite materials.

Preferably, the cylindrical stack is divided in a longitudinal direction of the stack by a plane including a rotation axis of the rotor in two similar half cylinders, the first pole being arranged in a first half cylinder, the second pole being arranged in the second half cylinder and similar to the first pole, the first and second groups of slots of the first pole and the first and second groups of slots of the second pole being symmetrical with respect to the plane, tie rods of the first groups of tie rods being arranged between the first and the second poles.

Advantageously, the rotor comprises, a third pole and a fourth pole similar to the first pole, the second pole being similar to the first pole, wherein the cylindrical stack is divided in a longitudinal direction of the stack in four similar cylindrical portions, the first pole being arranged in a first cylindrical portion, the second pole being arranged in a second cylindrical portion, the third pole being arranged in a third cylindrical portion, the fourth pole being arranged in the fourth cylindrical portion, so that the first and second groups of slots of the first pole and the first and second groups of slots of the second pole are symmetrical with respect to a first plane including a rotation axis of the rotor, and the first and second groups of slots of the third and fourth poles and the first and second groups of slots of the first and second poles are symmetrical with respect to a second symmetrical plane including the rotation axis of the rotor and perpendicular to the first plane.

Preferably, the rotor further comprises a third group of slots extending along the rotation axis of the rotor and lodging a rod made of a non-magnetic and electrically insulating material.

Advantageously, the rotor comprises a fourth group of slots, each slot of the fourth group of slots extending between the rotation axis of the rotor and the peripheral surface of the stack and being oriented according to the first or second plane, each slot of the fourth group of slots comprising third permanent magnets and magnetic flux barriers arranged at the end of each slot of the fourth group of slots near the peripheral surface of the stack.

Preferably, the rotor further comprises a second set of tie rods, arranged between the rotation axis of the rotor and the first, second, third and fourth poles, and between the slots of the third group of slots.

Another object of the invention relates to an electric machine comprising a stator and rotor as defined above, the rotor being inserted in the stator.

Another object of the invention relates to a motor Compressor comprising an electric machine as defined above and a compression section, the rotor being connected to the compression section.

Another object of the invention relates to a magnetic coupling comprising a rotor as defined above and an external rotor, the rotor being inserted in the external rotor.

Other characteristics and advantages of the invention will emerge on reading the following description of embodiments of the invention, provided solely by way of non-limiting examples and with reference to the drawings in which:
Figure 1 illustrates an embodiment of a motor compressor according to the invention,
Figures 2 and 3 illustrate schematically a first example of a rotor according to the invention,
Figure 4 illustrate schematically a second example of a rotor according to the invention,
Figure 5 illustrate schematically a third example of a rotor according to the invention, and
Figure 6 illustrate schematically an example of a magnetic coupling not according to the invention.

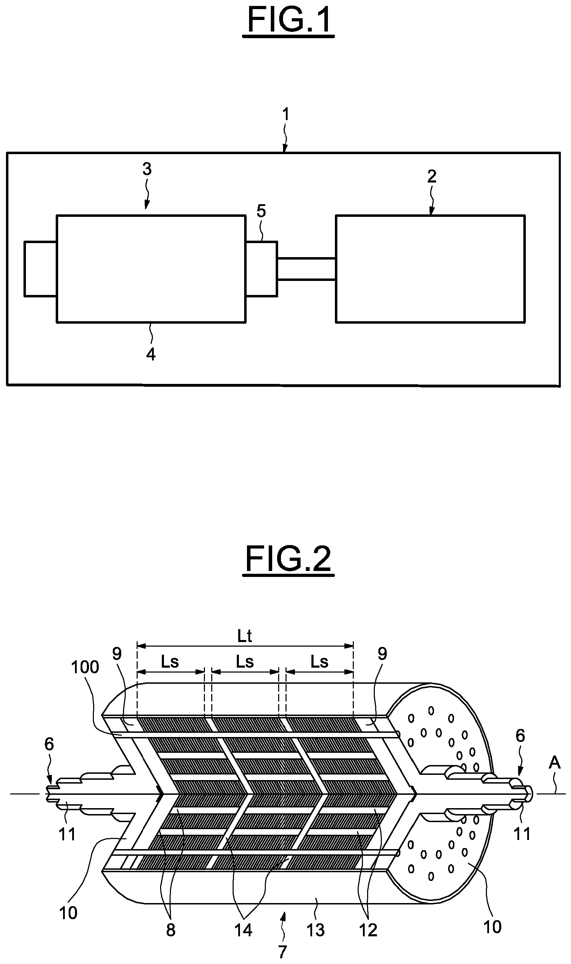

Figure 1 illustrates an embodiment of a motor compressor 1.

The motor compressor 1 comprises a compression section 2 intended to compress a gas and an electric machine 3.

The electric machine 3 comprises a stator 4 and a rotor 5 lodged in the stator.

The rotor 5 comprises first permanent magnets, the electric machine 3 being a synchronous permanent magnet electric machine 3.

The rotor 5 is connected to a shaft of the compression section 2 to drive the compression section 2.

The electric machine 3 may drive another mechanical system.

In variant, the rotor 5 of the electric machine 3 is driven by a motor system to generate electric energy.

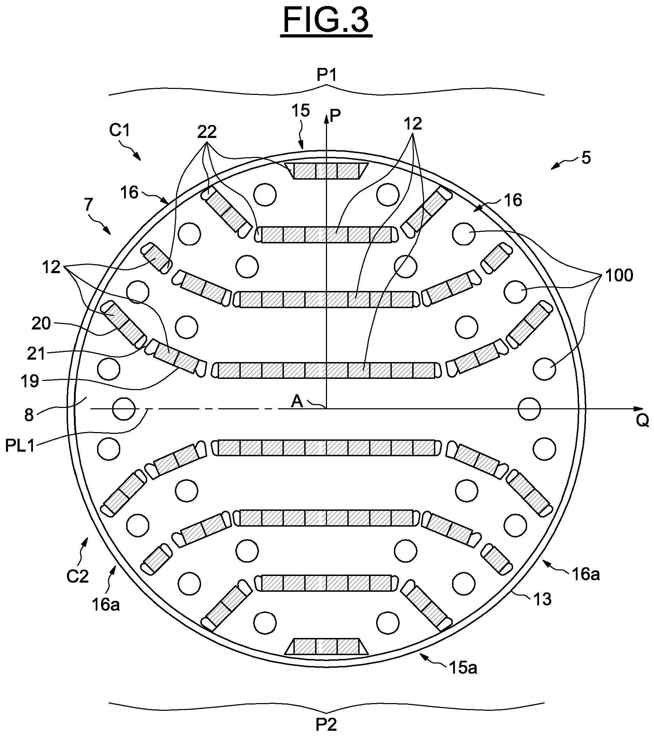

Figures 2 and 3 illustrate schematically cross sections of a first example of the rotor 5 with respect to a longitudinal and a radial directions of the rotor 5, the rotor 5 being a two poles permanent magnet rotor.

As illustrated on figure 2, the rotor 5 comprises two half shafts 6 enclosing a cylindrical stack 7 of laminations 8.

The two half shafts 6 form a shaft of the rotor 5, the rotor 5 being a non-through shaft rotor.

Each lamination 8 refers to thin metal plates or other thin plates, a plurality of which are typically stacked and adhered together to form the cylindrical stack 7.

The laminations 8 are made of a suitable ferromagnetic material, such as may have low loss and high mechanical strength suitable for substantially high rotational speeds.

The rotor 5 further comprises two non-magnetic and electrically insulating end disks 9, each non-magnetic and electrically insulating end disk 9 being arranged at an end of the cylindrical stack 7.

Each half shafts 6 comprises a flange 10 and a shaft 11 connected to a first face of the flange 10.

The shaft 11 of one of the half shafts 6 is connected to the shaft of the compression section 2.

The second face of each flange 10 is in contact with one non-magnetic and electrically insulating end disk 9.

As detailed in the following, the rotor 5 further comprises first groups of slots and second groups of slots arranged in the magnetic mass to form poles.

Some slots of the first group of slots comprise first permanent magnets 12 and some slots of the second group of slots comprise first permanent magnets 12.

The non-magnetic and electrically insulating end disks 9 positioned at the ends of the stack 7 prevent that axial magnetic flux generated by the first permanent magnets leak into the half shafts 6.

The non-magnetic and electrically insulating end disks 9 are of materials resisting to the pre-stressing forces of the stack 7 of laminations 8 and have low magnetic permeability, for example the non-magnetic and electrically insulating end disks 9 are made of austenitic stainless steel.

The rotor 5 further comprises a first set of tie rods 100 connecting the two half shafts 6 to keep the laminations 8 of the stack 7 compacted between the two half-shafts 6 and going through holes of the laminations 8.

Each tie rod 100 of the first set of tie rods is arranged between two adjacent slots of the first or second groups of slots.

The first set of tie rods 100 may be screwed or bolted in the half shafts 6.

The rotor 5 may further comprise a non-magnetic retaining ring 13 enclosing the stack 7 of laminations 8 and partially the flanges 10 of the half shafts, 6.

The diameter of the laminations 8 is smaller than the diameter of the flanges 10 so that the inner surface of the retaining ring 13 is in contact with the peripheral surface of the flanges 10.

The retaining ring 13 is made of a non-magnetic and electrically insulating material, for example stainless-steel or composite fibers such as thermoplastic carbon fibers.

The retaining ring 13 retains the laminations 8 and the magnets expelled out of the rotor 5 under the effect of centrifugal forces.

The rotor 5 comprising the half shafts 6 and the retaining ring 13 may rotate at rotating speeds such that the peripheral speed of the rotor 5 is greater than 200 m.s⁻¹ increasing the power density of the rotor 5 compared to a permanent magnet rotor known from the prior art.

Further, as the diameter of the laminations 8 is smaller than the inner diameter of the retaining ring 13, the retaining ring 9 allows pre-stressing of the stack 7 of laminations 8.

The stack 7 may further comprise at least one intermediate non-magnetic and electrically insulating disk 14 to separate the stack 7 in two sub-stacks of laminations 8.

As represented, the stack 7 comprises two intermediate non-magnetic and electrically insulating disks 14 arranged in the stack 7 so that laminations 8 are divided in three sub-stacks having a same length Ls, the sum of the length Ls of the three sub-stacks being equal to the length Lt of the stack 7.

In a variant, the length of each sub-stack may different, the sum of the lengths of the sub-stacks being equal to the length Lt of the stack 7.

Each intermediate non-magnetic and electrically insulating disk 14 may be made of a non-magnetic and electrically insulating material, for example stainless-steel or composite materials such as thermoplastic carbon fibers.

The stack 7 may comprise more than two intermediate non-magnetic and electrically insulating disks 14.

The diameter of the intermediate non-magnetic and electrically insulating disks 14 is equal to the diameter of the flanges 10 so that the retaining ring 13 is in contact with the peripheral surface of the intermediate non-magnetic and electrically insulating disks 14.

The intermediate non-magnetic and electrically insulating disks 14 homogenize the pre-stressing efforts of the first set of tie rods on the laminations 8 and are made for example of non-magnetic stainless steel.

As illustrated on figure 3, the cylindrical stack is divided in a longitudinal direction by a plane PL1 including the rotation axis A in two similar half cylinders C1, C2.

A first pole P1 is arranged in a first half cylinder C1 and the second pole P2 similar to the first pole P1 is arranged in the second half cylinder C2.

Each pole P1, P2 comprises a first group of slots 15, 15a and a second group of slots 16, 16a comprising first permanent magnets 12.

As the two poles P1, P2 are similar, the first pole P1 is detailed in the following.

The first group of slots 15 are arranged to form a magnetic flux along a direct axis P of the first pole P1 resulting from the first and second group of slots 15, 16.

The second group 16 of slots is arranged to provide a separation for the magnetic flux from adjacent poles and lying along a quadrature axis Q of said first pole P1.

The slots of the second group 16 of slots are arranged from either side of the slots of the first group 15.

The direct axis P is the axis by which flux is produced by the magnets 14 in the first group 15 of slots.

As the rotor 5 is a two poles permanent magnet rotor, the quadrature axis Q is the axis perpendicularly positioned relative to the direct axis P. The quadrature axis Q is angularly centered between two adjacent poles P1, P2.

The angle between the direct axis P and the quadrature axis Q is equal to 180° divided by the number of poles, the number of poles being an even number, the poles forming pair(s) of poles.

For example for a two poles rotor forming a pair of poles such as the rotor 5, the angle between the direct axis P and the quadrature axis Q is equal to 90°, for a four poles rotor, the angle between the direct axis P and the quadrature axis Q is equal to 45°, and for a six poles rotor, the angle between the direct axis P and the quadrature axis Q is equal to 30°.

The slots of the first group 15 of slots are arranged perpendicular to the direct axis P.

At least some slots of the first group of slots are arranged to receive a respective first permanent magnet 14. As illustrated, each of the first group of slots 15 includes a first permanent magnet 14.

The slots of the first group 15 of slots may be stacked one on the other along the direct axis P in an ascending order of the length of the slots of the first group 15 of slots perpendicular to the direct axis P, the slot of the first group 15 of slots having the greatest length perpendicular to the direct axis P being the closest to the rotation axis A, and the slot of the first group 15 of slots having the smallest length perpendicular to the direct axis P being the closest to the periphery of the laminations 8.

At least some of the second group 16 of slots may be arranged with respective first permanent magnet 12. In one example embodiment, as represented on figure 3, each slot of the second group of slots 16 includes a first permanent magnet 12. This arrangement results in a maximal magnetic field generated by the poles P1, P2.

At least some of the second group of slots 16 extend from a respective transition post configured to mechanically transition from the first group 15 of slots to the second group 16 of slots. That is, each transition post provides a structural member between one of the first group 15 of slots and an adjacent one of the second group 16 of slots, to buttress against expected mechanical forces.

Each slot of the second group 16 that extends from a respective transition post may include a section slantingly extending relative to a radius passing through a corresponding opening lodging a tie rod of the first set located along the path of the magnetic flux along the quadrature axis Q.

The slots of the second group 16 of slots may be made up of a pair of slots, such as slot pair 19 and 20 that extends from a respective center post 21.

Magnetic flux barriers 22 are arranged at each end of each slot of the first and second groups 15, 16 to prevent axial magnetic flux generated by the first permanent magnets 12 from looping in the laminations 7 so that that the magnetic flux generating a torque on the shaft 11 of the half shafts 6 is maximal.

The magnetic flux barriers 22 may be air or non-magnetic and electrically insulating wedges inserted in the ends of the slots.

The first and second groups 15, 16 of the first pole P1 and the first and second groups 15a, 16a of slots of the second pole P2 are symmetrical with respect to the plane PL1.

Some tie rods 100 of the first groups of tie rods are arranged between the first and the second poles P1, P2.

As the rotor 5 comprises a non through rotor shaft made of the two half shafts 6, the laminations 8 do not comprise a center hole to lodge a through rotor shaft so that the first and second groups 15, 16 comprise more slots than permanent rotors known from the prior art without modifying the dimensions of the rotor.

The volume of first permanent magnets 12 arranged on the first and second groups 15, 16 of the poles P1, P2 is increased so that the magnetic flux delivered by the rotor 5 is increased compared to the permanent magnet rotor know from the prior art increasing the torque delivered by the electric machine 3 on the shaft 11 of the half shafts 6.

As the torque delivered by the machine 3 is increased without modifying the encumbrance of the machine 2, the power density of the machine 3 is increased compared to a permanent magnet machine known from the prior art.

The first permanent magnets 12 and the wedges inserted in the ends of the slots may be securely join with the laminations 8 to avoid that the first permanent magnets 12 move in the slots under the effect of the centrifugal forces.

The first permanent magnets 12 and the wedges are for example bonded in the slots.

The thickness of the retaining ring 13 is chosen as thick as possible to increase the amplitude of the magnetic induction in the air gap of the machine 3 generated by the first permanent magnets buried in the stack 7.

Further, as the thickness of the retaining ring 13 is reduced, the rotor 5 comprises more permanent magnets 12 compared to a rotor known form the prior art having the same dimensions than the rotor 5.

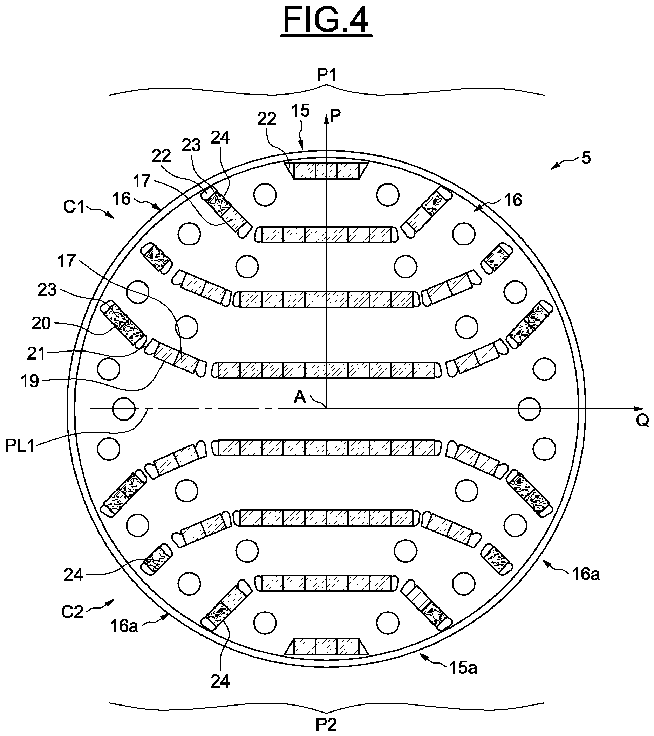

Figure 4 illustrate schematically a cross section of a second example of the rotor 5 with respect to a radial direction of the rotor 5.

The second example of the rotor 5 differs from the first example of the rotor 5 illustrated on figure 2 and 3 in that the slots 21 of the second group 16 of the first and second poles P1, P2 closest to the periphery of the stack of laminations comprises non-magnetic and electrically insulating blocks 23 replacing first permanent magnets 12.

Some slots 24 of the second group 16 of the first and second poles P1, P2 may comprise a first permanent magnet 12 and a non-magnetic and electrically insulating block 23.

In variant, some slots of the second group of slots of the poles P1, P2 comprise the blocks 23 in the place of first permanent magnet 12.

Replacing wholly or partially the first permanent magnets 12 in some slots of the second group 16 of the first and second poles P1, P2 reduces the quantity of first permanent magnets 12 in the rotor 5 while preserving the salience saliency effect.

The number of first permanent magnets 12 of the second groups 16 replaced by blocks 23 are determined so that the magnetic flux generated by the first permanent magnets 12 in the rotor 5 is enough to drive a mechanical system connected to one of the said half shafts, for example the compression section 2, or to generated a required electric energy when the rotor 5 is driven by a motor system.

The block 23 inserted in the slots of the second group 16 may be securely join with the laminations 8 to avoid that the blocks 23 move in the slots under the effect of the centrifugal forces.

The blocks 23 are for example bonded in the slots.

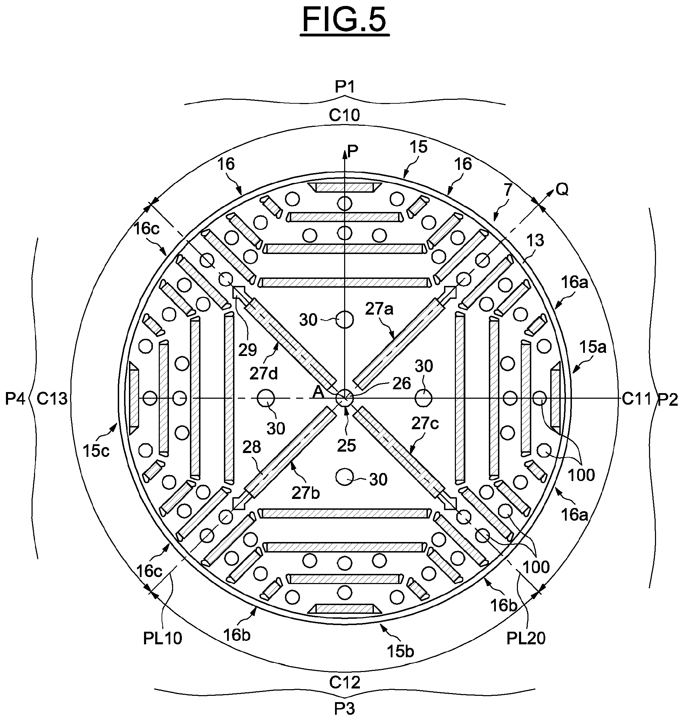

Figure 5 illustrate schematically a cross section of a third example of the rotor 5 with respect to a radial direction of the rotor 5.

The rotor 5 comprises the first and second poles P1, P2 comprising the first and second groups of slots, a third and a fourth pole P3, P4 similar to the first and second poles P1, P2.

The machine 3 comprising the rotor 5 is a four poles synchronous permanent magnet machine.

The cylindrical stack 7 is divided in a longitudinal direction of the stack 7 in four similar cylindrical portions C10, C11, C12, C13.

The first pole P1 is arranged in a first cylindrical portion C10, the second pole P2 is arranged in a second cylindrical portion C11, the third pole P3 is arranged in a third cylindrical portion C13, and the fourth pole P4 is arranged in the fourth cylindrical portion C14.

The poles P1, P2, P3, P4 are arranged in the cylindrical portions C10, C11, C12, 13 so that the first and second groups 15, 16 of slots of the first pole P1 and the first and second groups 15a, 16a of slots of the second pole P2 are symmetrical with respect to a first plane PL10 including the rotation axis A of the rotor 5, and so that the first and second groups 15b, 15c, 16b, 16c of slots of the third and fourth poles P3, P4 and the first and second groups 15, 15a, 16, 16a of slots of the first and second poles P1, P2 are symmetrical with respect to a second symmetrical plane PL20 including the rotation axis A and perpendicular to the first plane PL10.

Slots of the first and second groups 15, 15a, 15b, 15c, 16, 16a, 16b, 16c of slots of the poles P1, P2, P3, P4 include permanent magnets 12.

The rotor 5 may further comprise a third group of slots 25 extending along the rotation axis A of the rotor 5 and lodging a rod 26 made of a non-magnetic and electrically insulating material, for example stainless-steel or composite materials such as thermoplastic carbon fibers. The rod 26 and the slots 25 may be cylindrical.

The rotor 5 may further comprise a fourth group of slots 27a, 27b, 27c, 27d.

Each slot 27a, 27b, 27c, 27d of the fourth group of slots extends between the rotation axis A of the rotor 5 and the peripheral surface of the stack 7.

A first and a second slots 27a, 27b of the fourth group are oriented according to the first plane P10, and a third and a fourth slots 27c, 27d of the fourth group are oriented according to the second plane P20.

The first slot 27a of the fourth group is arranged between the first pole P1 and the second pole P2, the second slot 27b of the fourth group is arranged between the third pole P3 and the fourth pole P4, the third slot 27c of the fourth group is arranged between the second pole P2 and the third pole P3, and the fourth slot 27d of the fourth group is arranged between the first pole P1 and the fourth pole P4.

Each slot 27a, 27b, 27c, 27d of the fourth group of slots comprises third permanent magnets 28 and magnetic flux barriers 29 arranged at the end of the said slot 27a, 27b, 27c, 27d near the peripheral surface of the stack 7.

The rod 26 and the slots 25 may be cylindrical. The rod 26 prevents the leaking of the magnetic flux generated by the third permanent magnets.

The rotor 5 comprising the first and second groups 15, 15a, 15b, 15c, 16, 16a, 16b, 16c of slots of the poles P1, P2, P3, P4 including permanent magnets 12 and the fourth group of slots 27a, 27b, 27c, 27d including third permanent magnets 28 and magnetic flux barriers 29 forms a rotor combining a multi-layer rotor type known from the prior art and a flux concentration type from the prior art. The rotor 5 comprises more permanent magnets as rotors known from the prior art.

As the torque density of the machine 3 is proportional to the magnetic flux generated by the magnets of the rotor 5, the torque density of the machine 3 is increased compared to a machine known from the prior art having the same encumbrance as the machine 3.

The third permanent magnets 28 add a field alignment torque in the direct axis of each pole P1, P2, P3, P4 and a reluctant torque in the quadrature axis of each pole P1, P2, P3, P4 to maximize the amount of torque generated by the rotor 5.

The second and third permanent magnets 26, 28 inserted in the ends of the slots may be securely join with the laminations 8 to avoid that the second and third permanent magnets 26, 28 move in the slots under the effect of the centrifugal forces.

The second and third permanent magnets 26, 28 are for example bonded in the slots.

The stack 7 further comprises a second set of tie rods 30 arranged between the rotation axis A of the rotor and the first, second, third and fourth poles P1, P2, P3, P4, and between the slots of the fourth group of slots 27a, 27b, 27c, 27d.

The second set of tie rods 30 connect the two non-magnetic and electrically insulating end disks 9 to keep the laminations 8 of the stack 7 compacted between the non-magnetic and electrically insulating end disks 9 and going through holes of the laminations 8.

The second set of tie rods 30 may be screwed or bolted in the non-magnetic and electrically insulating end disks 9.

In variant, the rotor 5 may comprise more than four poles, the cylindrical stack 7 being divided accordingly, the number of poles being an even number. The cylindrical stack 7 is divided in a longitudinal direction of the stack 7 in identical cylindrical portions, the number of cylindrical portions being equal to the number of poles, each pole being arranged in a cylindrical portion. The first and second groups of slots of one pole and the first and second groups of slots of an adjacent pole are symmetrical with respect to a plane including the rotation axis A of the rotor 5, the plane separating the cylindrical portions of the said one pole and the said adjacent pole.

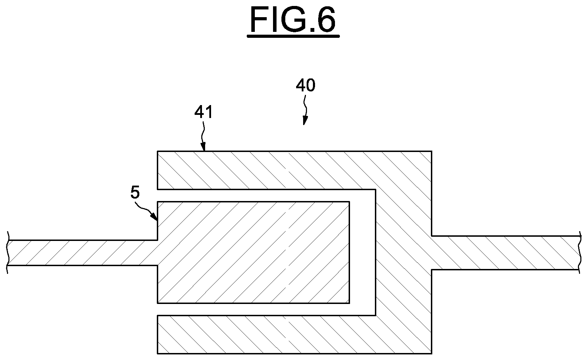

Figure 6 illustrates an example of a magnetic coupling 40 not according to the invention.

The magnetic coupling 40 comprises an external rotor 41.

The rotor 5 is inserted in the external rotor 41.

The torque applied to one of the rotor 5 and external rotor 41 is transferred through an air gap to the other rotor.

## Claims

1. Rotor (5) comprising:
- a cylindrical stack (7) of laminations (8) including:
o at least a first group (15) of slots and a second group (16) of slots arranged to form a first pole (P1), the first group of slots being arranged to form a magnetic flux along a direct axis (P) of the pole resulting from the first and second group of slots, at least some of the first group of slots comprising first permanent magnets (12), the second group of slots being arranged from either side of the slots of the first group to provide a separation for the magnetic flux from adjacent poles and lying along a quadrature axis (Q) of said pole, at least some slots of the second group of slots comprising first permanent magnets, and
o at least a second pole (P2), the first pole (P1) and the second pole (P2) forming a pair of poles of the rotor (5),
- magnetic flux barriers (22) arranged at each end of each slot of the first and second groups of slots,
**characterized in that** the rotor further comprises:
- two half shafts (6) enclosing the stack of laminations and forming a shaft of the rotor, the rotor being a non-through shaft rotor,
- two non-magnetic and electrically insulating end disks (9), each non-magnetic and electrically insulating end disk being interposed between one end of the stack and a half shaft, and
- a first set of tie rods (100) connecting the two half shafts to keep the laminations of the stack compacted between the two half-shafts, each tie rod of the first set of tie rods being arranged between two adjacent slots of the first or second groups of slots.

2. Rotor according to claim 1, wherein at least some slots of the second group (16) of slots closest to the periphery of the stack (7) of laminations (8) comprises non-magnetic and electrically insulating blocks (23).

3. Rotor according to claim 1 or 2, wherein each half shaft (6) comprises a flange (10) in contact with a non-magnetic and electrically insulating end disk (9), the rotor further comprising a non-magnetic retaining ring (13) enclosing the stack (7) of laminations (8) and partially the flanges of the half shafts, the diameter of the laminations being smaller than the diameter of the flanges so that the inner surface of the retaining ring is in contact with the peripheral surface of the flanges, the retaining ring being made of a non-magnetic and electrically insulating material.

4. Rotor according to claim 3, wherein the retaining ring (13) is made of a stainless-steel.

5. Rotor according to claim 3, wherein the retaining ring (13) is made of composite fibers.

6. Rotor according to any one of claims 3 to 5, wherein the laminations (8) of the stack (7) are separated by at least one intermediate non-magnetic and electrically insulating disk (14) in two sub-stacks of laminations, the diameter of the intermediate non-magnetic and electrically insulating disk being equal to the diameter of the flanges (10) so that the retaining ring is in contact the peripheral surface of the intermediate non-magnetic and electrically insulating disk.

7. Rotor according to any one of claims 1 to 6, wherein the cylindrical stack (7) is divided in a longitudinal direction of the stack by a plane (PL1) including a rotation axis (A) of the rotor in two similar half cylinders (C1, C2), the first pole (P1) being arranged in a first half cylinder (C1), the second pole (P2) being arranged in the second half cylinder (C2) and similar to the first pole, the first and second groups (15, 16) of slots of the first pole (P1) and the first and second groups (15a, 16a) of slots of the second pole (P2) being symmetrical with respect to the plane (PL1), tie rods of the first groups of tie rods (100) being arranged between the first and the second poles .

8. Rotor according to any one of claims 1 to 6, further comprising a third pole (P3) and a fourth pole (P3) similar to the first pole (P1), the second pole (P2) being similar to the first pole (P1), wherein the cylindrical stack (7) is divided in a longitudinal direction of the stack in four similar cylindrical portions (C10, C11, C12, C13), the first pole (P1) being arranged in a first cylindrical portion (C10), the second pole (P2) being arranged in a second cylindrical portion (C11), the third pole (P3) being arranged in a third cylindrical portion (C12), the fourth pole (P4) being arranged in the fourth cylindrical portion (C13), so that the first and second groups (15, 16) of slots of the first pole (P1) and the first and second groups (15a, 16a) of slots of the second pole (P2) are symmetrical with respect to a first plane (PL10) including a rotation axis (A) of the rotor, and the first and second groups (15b, 15c, 16b, 16c) of slots of the third and fourth poles (P3, P4) and the first and second groups of slots of the first and second poles are symmetrical with respect to a second symmetrical plane (PL20) including the rotation axis (A) of the rotor and perpendicular to the first plane.

9. Rotor according to claim 8, further comprising a third group of slots (25) extending along the rotation axis (A) of the rotor (5) and lodging a rod (26) made of a non-magnetic and electrically insulating material.

10. Rotor according to claim 8 or 9, further comprising a fourth group of slots (27a, 27b, 27c, 27d), each slot of the fourth group of slots extending between the rotation axis (A) of the rotor and the peripheral surface of the stack (7) and being oriented according to the first or second plane (PL10, PL20), each slot of the fourth group of slots comprising third permanent magnets (28) and magnetic flux barriers (29) arranged at the end of each slot of the fourth group of slots near the peripheral surface of the stack.

11. Rotor according to claim 10, further comprising a second set of tie rods (30), arranged between the rotation axis of the rotor and the first, second, third and fourth poles, and between the slots of the fourth group of slots (27a, 27b, 27c, 27d).

12. Electric machine (3) comprising a stator (4) and rotor (5) according to any one of claims 1 to 11, the rotor being inserted in the stator.

13. Motor Compressor (1) comprising an electric machine (3) according to claim 12 and a compression section (2), the rotor being connected to the compression section.

14. Magnetic coupling (40) comprising a rotor (5) according to any one of claim 1 to 11, and an external rotor (41), the rotor being inserted in the external rotor.

## Patentansprüche

1. Rotor (5), umfassend:
- einen zylindrischen Stapel (7) von Lamellen (8), einschließlich:
o mindestens eine erste Gruppe (15) von Schlitzen und eine zweite Gruppe (16) von Schlitzen, die so angeordnet sind, dass sie einen ersten Pol (P1) bilden, wobei die erste Gruppe von Schlitzen so angeordnet ist, dass sie einen Magnetfluss entlang einer direkten Achse (P) des Pols bildet, der sich aus der ersten und zweiten Gruppe von Schlitzen ergibt, wobei mindestens einige der ersten Gruppe von Schlitzen erste Permanentmagnete (12) umfassen, wobei die zweite Gruppe von Schlitzen von jeder Seite der Schlitze der ersten Gruppe angeordnet ist, um eine Trennung für den Magnetfluss von benachbarten Polen zu gewährleisten, und entlang einer Vierecksachse (Q) des Pols liegt, wobei mindestens einige Schlitze der zweiten Gruppe von Schlitzen erste Permanentmagnete umfassen, und
o mindestens einen zweiten Pol (P2), wobei der erste Pol (P1) und der zweite Pol (P2) ein Polpaar des Rotors (5) bilden,
- Magnetflussbarrieren (22), die an jedem Ende jedes Schlitzes der ersten und der zweiten Gruppe von Schlitzen angeordnet sind,
**dadurch gekennzeichnet, dass** der Rotor ferner Folgendes umfasst:
- zwei Halbwellen (6), die den Stapel von Lamellen umschließen und eine Welle des Rotors bilden, wobei der Rotor ein nicht durchgehender Wellenrotor ist,
- zwei nichtmagnetische und elektrisch isolierende Endscheiben (9), wobei jede nichtmagnetische und elektrisch isolierende Endscheibe zwischen einem Ende des Stapels und einer Halbwelle eingelegt ist, und
- einen ersten Satz von Zugstangen (100), die die beiden Halbwellen verbinden, um die Lamellen des Stapels zwischen den beiden Halbwellen verdichtet zu halten, wobei jede Zugstange des ersten Satzes von Zugstangen zwischen zwei benachbarten Schlitzen der ersten oder der zweiten Gruppe von Schlitzen angeordnet ist.

2. Rotor nach Anspruch 1, wobei mindestens einige Schlitze der zweiten Gruppe (16) von Schlitzen, die der Peripherie des Stapels (7) von Lamellen (8) am nächsten sind, nichtmagnetische und elektrisch isolierende Blöcke (23) umfassen.

3. Rotor nach Anspruch 1 oder 2, wobei jede Halbwelle (6) einen Flansch (10) umfasst, der in Kontakt mit einer nichtmagnetischen und elektrisch isolierenden Endscheibe (9) steht, wobei der Rotor ferner einen nichtmagnetischen Sicherungsring (13) umfasst, der den Stapel (7) von Lamellen (8) und teilweise die Flansche der Halbwellen umschließt, wobei der Durchmesser der Lamellen kleiner als der Durchmesser der Flansche ist, so dass die Innenfläche des Sicherungsrings in Kontakt mit der Umfangsfläche der Flansche ist, wobei der Sicherungsring aus einem nichtmagnetischen und elektrisch isolierenden Material besteht.

4. Rotor nach Anspruch 3, wobei der Sicherungsring (13) aus Edelstahl besteht.

5. Rotor nach Anspruch 3, wobei der Sicherungsring (13) aus Verbundfasern besteht.

6. Rotor nach einem der Ansprüche 3 bis 5, wobei die Lamellen (8) des Stapels (7) durch mindestens eine nichtmagnetische und elektrisch isolierende Zwischenscheibe (14) in zwei Teilstapel von Lamellen getrennt sind, wobei der Durchmesser der nichtmagnetischen und elektrisch isolierenden Zwischenscheibe gleich dem Durchmesser der Flansche (10) ist, so dass der Sicherungsring die Umfangsfläche der nichtmagnetischen und elektrisch isolierenden Zwischenscheibe berührt.

7. Rotor nach einem der Ansprüche 1 bis 6, wobei der zylindrische Stapel (7) in einer Längsrichtung des Stapels durch eine Ebene (PL1), die eine Rotationsachse (A) des Rotors enthält, in zwei ähnliche Halbzylinder (C1, C2) unterteilt ist, wobei der erste Pol (P1) in einem ersten Halbzylinder (C1) angeordnet ist, wobei der zweite Pol (P2) in dem zweiten Halbzylinder (C2) und ähnlich wie der erste Pol angeordnet ist, wobei die erste und die zweite Gruppe (15, 16) von Schlitzen des ersten Pols (P1) und die erste und die zweite Gruppe (15a, 16a) von Schlitzen des zweiten Pols (P2) in Bezug auf die Ebene (PL1) symmetrisch sind, wobei die Zugstangen der ersten Gruppen von Zugstangen (100) zwischen dem ersten und dem zweiten Pol angeordnet sind.

8. Rotor nach einem der Ansprüche 1 bis 6, ferner umfassend einen dritten Pol (P3) und einen vierten Pol (P3) ähnlich dem ersten Pol (P1), wobei der zweite Pol (P2) ähnlich dem ersten Pol (P1) ist, wobei der zylindrische Stapel (7) in Längsrichtung des Stapels in vier ähnliche zylindrische Abschnitte (C10, C11, C12, C13) unterteilt ist, wobei der erste Pol (P1) in einem ersten zylindrischen Abschnitt (C10) angeordnet ist, wobei der zweite Pol (P2) in einem zweiten zylindrischen Abschnitt (C11) angeordnet ist, wobei der dritte Pol (P3) in einem dritten zylindrischen Abschnitt (C12) angeordnet ist, wobei der vierte Pol (P4) in dem vierten zylindrischen Abschnitt (C13) angeordnet ist, so dass die erste und die zweite Gruppe (15, 16) von Schlitzen des ersten Pols (P1) und die erste und die zweite Gruppe (15a, 16a) von Schlitzen des zweiten Pols (P2) in Bezug auf eine erste Ebene (PL10) einschließlich einer Rotationsachse (A) des Rotors symmetrisch sind, und die erste und die zweite Gruppe (15b, 15c, 16b, 16c) von Schlitzen des dritten und des vierten Pols (P3, P4) und die erste und die zweite Gruppe von Schlitzen des ersten und des zweiten Pols in Bezug auf eine zweite symmetrische Ebene (PL20), die die Rotationsachse (A) des Rotors enthält und senkrecht zur ersten Ebene steht, symmetrisch sind.

9. Rotor nach Anspruch 8, der ferner eine dritte Gruppe von Schlitzen (25) umfasst, die sich entlang der Rotationsachse (A) des Rotors (5) erstrecken und einen Stab (26) aus einem nichtmagnetischen und elektrisch isolierenden Material aufnehmen.

10. Rotor nach Anspruch 8 oder 9, ferner umfassend eine vierte Gruppe von Schlitzen (27a, 27b, 27c, 27d), wobei sich jeder Schlitz der vierten Gruppe von Schlitzen zwischen der Rotationsachse (A) des Rotors und der Umfangsfläche des Stapels (7) erstreckt und entsprechend der ersten oder zweiten Ebene (PL10, PL20) ausgerichtet ist, wobei jeder Schlitz der vierten Gruppe von Schlitzen dritte Permanentmagnete (28) und Magnetflussbarrieren (29) umfasst, die an dem Ende jedes Schlitzes der vierten Gruppe von Schlitzen in der Nähe der Umfangsfläche des Stapels angeordnet sind.

11. Rotor nach Anspruch 10, ferner umfassend einen zweiten Satz von Zugstangen (30), der zwischen der Rotationsachse des Rotors und dem ersten, dem zweiten, dem dritten und dem vierten Pol und zwischen den Schlitzen der vierten Gruppe von Schlitzen (27a, 27b, 27c, 27d) angeordnet ist.

12. Elektrische Maschine (3), umfassend einen Stator (4) und Rotor (5) nach einem der Ansprüche 1 bis 11, wobei der Rotor in den Stator eingesetzt ist.

13. Motorverdichter (1), umfassend eine elektrische Maschine (3) nach Anspruch 12 und einen Verdichtungsabschnitt (2), wobei der Rotor mit dem Verdichtungsabschnitt verbunden ist.

14. Magnetkupplung (40), umfassend einen Rotor (5) nach einem der Ansprüche 1 bis 11 und einen Außenrotor (41), wobei der Rotor in den Außenrotor eingesetzt ist.

## Revendications

1. Rotor (5) comprenant :
- un empilement (7) cylindrique de stratifications (8) comportant :
o au moins un premier groupe (15) de fentes et un deuxième groupe (16) de fentes agencés pour former un premier pôle (P1), le premier groupe de fentes étant agencé pour former un flux magnétique le long d'un axe direct (P) du pôle résultant du premier et du deuxième groupe de fentes, au moins certaines du premier groupe de fentes comprenant des premiers aimants permanents (12), le deuxième groupe de fentes étant agencé de chaque côté des fentes du premier groupe pour assurer une séparation pour le flux magnétique par rapport à des pôles adjacents et se trouvant le long d'un axe de quadrature (Q) dudit pôle, au moins certaines fentes du deuxième groupe de fentes comprenant des premiers aimants permanents, et
o au moins un deuxième pôle (P2), le premier pôle (P1) et le deuxième pôle (P2) formant une paire de pôles du rotor (5),
- des barrières de flux magnétique (22) agencées à chaque extrémité de chaque fente des premier et deuxième groupes de fentes,
**caractérisé en ce que** le rotor comprend en outre :
- deux demi-arbres (6) enfermant l'empilement de stratifications et formant un arbre du rotor, le rotor étant un rotor à arbre non traversant,
- deux disques d'extrémité non magnétiques et électriquement isolants (9), chaque disque d'extrémité non magnétique et électriquement isolant étant interposé entre une extrémité de l'empilement et un demi-arbre, et
- un premier jeu de tirants (100) reliant les deux demi-arbres pour maintenir les stratifications de l'empilement compactées entre les deux demi-arbres, chaque tirant du premier jeu de tirants étant agencé entre deux fentes adjacentes des premier ou deuxième groupes de fentes.

2. Rotor selon la revendication 1, dans lequel au moins certaines fentes du deuxième groupe (16) de fentes les plus proches de la périphérie de l'empilement (7) de stratifications (8) comprennent des blocs non magnétiques et électriquement isolants (23).

3. Rotor selon la revendication 1 ou 2, dans lequel chaque demi-arbre (6) comprend un rebord (10) en contact avec un disque d'extrémité non magnétique et électriquement isolant (9), le rotor comprenant en outre une bague de retenue non magnétique (13) enfermant l'empilement (7) de stratifications (8) et partiellement les rebords des demi-arbres, le diamètre des stratifications étant inférieur au diamètre des rebords de sorte que la surface intérieure de la bague de retenue soit en contact avec la surface périphérique des rebords, la bague de retenue étant constituée d'un matériau non magnétique et électriquement isolant.

4. Rotor selon la revendication 3, dans lequel la bague de retenue (13) est constituée d'acier inoxydable.

5. Rotor selon la revendication 3, dans lequel la bague de retenue (13) est constituée de fibres composites.

6. Rotor selon l'une quelconque des revendications 3 à 5, dans lequel les stratifications (8) de l'empilement (7) sont séparées par au moins un disque intermédiaire non magnétique et électriquement isolant (14) en deux sous-empilements de stratifications, le diamètre du disque intermédiaire non magnétique et électriquement isolant étant égal au diamètre des rebords (10) de sorte que la bague de retenue soit en contact avec la surface périphérique du disque intermédiaire non magnétique et électriquement isolant.

7. Rotor selon l'une quelconque des revendications 1 à 6, dans lequel l'empilement (7) cylindrique est divisé dans une direction longitudinale de l'empilement par un plan (PL1) comportant un axe de rotation (A) du rotor en deux demi-cylindres (C1, C2) similaires, le premier pôle (P1) étant agencé dans un premier demi-cylindre (C1), le deuxième pôle (P2) étant agencé dans le second demi-cylindre (C2) et similaire au premier pôle, les premier et deuxième groupes (15, 16) de fentes du premier pôle (P1) et les premier et deuxième groupes (15a, 16a) de fentes du deuxième pôle (P2) étant symétriques par rapport au plan (PL1), des tirants des premiers groupes de tirants (100) étant agencés entre les premier et deuxième pôles.

8. Rotor selon l'une quelconque des revendications 1 à 6, comprenant en outre un troisième pôle (P3) et un quatrième pôle (P3) similaire au premier pôle (P1), le deuxième pôle (P2) étant similaire au premier pôle (P1), dans lequel l'empilement (7) cylindrique est divisé dans une direction longitudinale de l'empilement en quatre parties cylindriques (C10, C11, C12, C13) similaires, le premier pôle (P1) étant agencé dans une première partie cylindrique (C10), le deuxième pôle (P2) étant agencé dans une deuxième partie cylindrique (C11), le troisième pôle (P3) étant agencé dans une troisième partie cylindrique (C12), le quatrième pôle (P4) étant agencé dans la quatrième partie cylindrique (C13), de sorte que les premier et deuxième groupes (15, 16) de fentes du premier pôle (P1) et les premier et deuxième groupes (15a, 16a) de fentes du deuxième pôle (P2) soient symétriques par rapport à un premier plan (PL10) comportant un axe de rotation (A) du rotor, et les premier et deuxième groupes (15b, 15c, 16b, 16c) de fentes des troisième et quatrième pôles (P3, P4) et les premier et deuxième groupes de fentes des premier et deuxième pôles sont symétriques par rapport à un second plan symétrique (PL20) comportant l'axe de rotation (A) du rotor et perpendiculaire au premier plan.

9. Rotor selon la revendication 8, comprenant en outre un troisième groupe de fentes (25) s'étendant le long de l'axe de rotation (A) du rotor (5) et abritant une tige (26) constituée d'un matériau non magnétique et électriquement isolant.

10. Rotor selon la revendication 8 ou 9, comprenant en outre un quatrième groupe de fentes (27a, 27b, 27c, 27d), chaque fente du quatrième groupe de fentes s'étendant entre l'axe de rotation (A) du rotor et la surface périphérique de l'empilement (7) et étant orientée selon le premier ou le second plan (PL10, PL20), chaque fente du quatrième groupe de fentes comprenant des troisièmes aimants permanents (28) et des barrières de flux magnétiques (29) agencés à l'extrémité de chaque fente du quatrième groupe de fentes près de la surface périphérique de l'empilement.

11. Rotor selon la revendication 10, comprenant en outre un second jeu de tirants (30), agencé entre l'axe de rotation du rotor et les premier, deuxième, troisième et quatrième pôles, et entre les fentes du quatrième groupe de fentes (27a, 27b, 27c, 27d).

12. Machine électrique (3) comprenant un stator (4) et un rotor (5) selon l'une quelconque des revendications 1 à 11, le rotor étant inséré dans le stator.

13. Motocompresseur (1) comprenant une machine électrique (3) selon la revendication 12 et une section de compression (2), le rotor étant relié à la section de compression.

14. Accouplement magnétique (40) comprenant un rotor (5) selon l'une quelconque des revendications 1 à 11 et un rotor externe (41), le rotor étant inséré dans le rotor externe.
